# EUROPÄISCHE PATENTSCHRIFT

(11) **EP 1 368 625 B1**
(45) Veröffentlichungstag und Bekanntmachung des Hinweises auf die Patenterteilung: **07.12.2016**
(21) Anmeldenummer: 02719870.4
(22) Anmeldetag: 19.02.2002
(51) Int. Cl.: G01K 13/00

(54) **STRAHLUNGS-THERMOMETER MIT BEHEIZTER MESSSPITZE**
RADIATION THERMOMETER COMPRISING A HEATED MEASURING TIP
THERMOMETRE A RAYONNEMENT A SONDE CHAUFFEE

(30) Priorität: 19.02.2001 DE 10108095
(43) Veröffentlichungstag der Anmeldung: 10.12.2003
(73) Patentinhaber: KAZ Europe SA, 1003 Lausanne (CH)
(72) Erfinder: KLÖS, Alexander, 65719 Hofheim (DE); KRAUS, Bernhard, 35619 Braunfels (DE)
(74) Vertreter: Grünecker Patent- und Rechtsanwälte PartG mbB
(86) Internationale Anmeldenummer: PCT/EP2002/001735
(87) Internationale Veröffentlichungsnummer: WO 2002/066947

(56) Entgegenhaltungen:
- EP-A- 1 081 475
- WO-A-00/58703
- WO-A-92/10133
- US-A- 3 491 596

## Beschreibung

Die Erfindung betrifft ein Strahlungs-Thermometer mit beheizter Meßspitze, insbesondere ein Infrarot-Ohrthermometer zur Fiebermessung. Derartige Thermometer enthalten bekanntermaßen einen Infrarot-Sensor, einen Umgebungstemperatursensor und eine Auswertungseinrichtung, die aus den Ausgangssignalen der Sensoren die Temperatur eines Meßobjekts bestimmt.

Aus der WO 00/58703 ist ein Infrarot-Ohrthermometer mit einer durch ein eingebautes Heizelement beheizbaren Meßspitze bekannt. Wenn eine beheizte Meßspitze in einen Gehörgang eingeführt wird, findet praktisch kein Wärmeaustausch zwischen der Meßspitze und dem Gehörgang mehr statt, sodaß sich die Meßspitze und der Gehörgang während der Temperaturmessung im thermischen Gleichgewicht befinden. Auf diese Weise werden Meßfehler vermieden, die durch ein Abkühlen des Ohrkanals entstehen, wenn die in den Ohrkanal eingeführte Meßspitze kälter ist als dieser. Das Ohrthermometer ist mit einer Steuereinrichtung zur Regelung der Temperatur der Meßspitze versehen, die außerdem feststellt, ob sich die Meßspitze im Gehörgang befindet, und die das Heizelement ein- und ausschaltet, wenn die Meßspitze in den Gehörgang eingeführt bzw. aus diesem herausgezogen wird.

Aus der EP 1081475 ist ein Infrarot-Thermometer bekannt, dessen Meßspitze an ihrem vorderen Ende durch einen dort angeordneten beheizbaren Infrarot-Sensor beheizbar ist.

Es ist Aufgabe der vorliegenden Erfindung ein Strahlungsthermometer mit einer beheizbaren Meßspitze sowie ein Meßverfahren für ein derartiges Thermometer anzugeben, das dieselbe einfache Bedienung ermöglicht, wie sie von Thermometern ohne beheizbare Meßspitze bekannt ist.

Zur Lösung dieser Aufgabe ist ein erfindungsgemäßes Thermometer mit einer Einrichtung zur Steuerung des Meßablaufs versehen. Bei einer bevorzugten Ausführung eines erfindungsgemäßen Thermometers ist die Steuereinrichtung und die Auswertungseinrichtung in einem Mikrokontroller oder dgl. vereinigt, der auch eine Anzeigeeinrichtung ansteuert. Der Meßablauf ist unabhängig davon, ob die Meßspitze direkt durch ein Heizelement oder indirekt durch einen beheizbaren Infrarot-Sensor beheizt wird. Ein erfindungsgemäßer Meßablauf ist nachfolgend beschrieben. Zuerst wird der Benutzer das Thermometer in an sich bekannter Weise einschalten. Danach wird die Meßspitze des Thermometers selbsttätig auf eine bestimmte Temperatur aufgeheizt, beispielsweise auf ca. 37°C. Diese Temperatur ist bei einem Thermometer mit einem aus der WO 00/58703 oder EP 1081475 bekannten Aufbau bereits nach sehr kurzer Zeit erreicht, beispielsweise einigen Sekunden. Damit ist das Thermometer meßbereit. Der Benutzer kann nun die Meßspitze des Thermometers ins Ohr einführen, und durch Betätigen einer Betätigungseinrichtung die Temperaturmessung starten, beispielsweise durch Drücken eines Knopfs.

Ein erfindungsgemäßes Thermometer kann außerdem eine Detektionseinrichtung enthalten, die feststellt, ob die Meßspitze des Thermometers ins Ohr eingeführt ist oder nicht. In diesem Fall kann das Einführen der Meßspitze ins Ohr mit dem Betätigen der Betätigungseinrichtung gleichgesetzt werden, d.h. nach dem Einführen wird die Detektionseinrichtung feststellen, daß sich die Meßspitze im Ohr befindet, und daraufhin, wie nachfolgend erläutert wird, den weitern Meßvorgang in Gang setzen, ohne daß der Benutzer noch zusätzlich eine (weitere) Betätigungseinrichtung betätigen muß.

Bei einem batteriebetriebenen Thermometer ist es besonders vorteilhaft, wenn sich das Thermometer, um Strom zu sparen, selbsttätig nach beispielsweise 1 Minute ausschaltet, falls der Benutzer die Betätigungseinrichtung bis dahin noch nicht betätigt hat.

Nachdem der Benutzer die Betätigungsvorrichtung betätigt hat, läuft bei einem erfindungsgemäßen Infrarot-Thermometer ein Meßvorgang in folgender Weise selbsttätig ab: Zuerst wird die Heizung der Meßspitze ausgeschaltet. Vorzugsweise wird erst nach Ablauf einer bestimmten Zeit, beispielsweise 1 Sekunde, mehrmals nacheinander die Temperatur des Meßobjekts, d.h. insbesondere die Körpertemperatur, gemessen. Diese Verzögerung im Meßablauf hat den Vorteil, daß sich eventuell vorhandene Temperaturunterschiede innerhalb der Meßspitze bzw. des Infrarot-Sensors vor den Temperaturmessungen ausgleichen können. Aus den gemessenen Temperaturen wird dann die anzuzeigende Temperatur des Meßobjekts bestimmt und spätestens nach Ablauf einer maximalen Meßzeit oder nach einer maximalen Anzahl von Temperaturmessungen auf einer Anzeigeeinrichtung angezeigt. Falls die gemessenen Temperaturen sich jedoch voneinander zu stark unterscheiden oder eine Mindestanzahl aufeinanderfolgend gemessener Temperaturen nicht zumindest nahezu gleich sind oder sich nicht im Verlauf des Meßvorgangs auf einen gewissen Wert einpendeln oder ein anderes geeignetes Kriterium für die Aussagekraft der gemessenen Temperaturen nicht erfüllt ist, ist es vorteilhaft, anstelle einer Temperatur eine Fehlermeldung auszugeben, die dem Benutzer eine Wiederholung des Temperaturmeßvorgangs empfiehlt. Die Ausgabe der Fehlermeldung kann bereits nach einer minimalen Meßzeit oder einer minimalen Anzahl von Temperaturmessungen erfolgen, wenn mit einem aussagekräftigen Temperaturwert innerhalb der maximalen Meßzeit bzw. nach der maximalen Anzahl von Temperaturmessungen nicht mehr gerechnet werden kann. Unterscheiden sich jedoch die gemessenen Temperaturen voneinander nicht zu stark oder ist eine Mindestanzahl aufeinanderfolgend gemessener Temperaturen zumindest nahezu gleich oder pendeln sie sich im Verlauf des Meßvorgangs auf einen gewissen Wert ein oder ist ein anderes geeignetes Kriterium für die Aussagekraft der gemessenen Temperaturen erfüllt, wird die anzuzeigende Temperatur vorzugsweise sofort angezeigt, d.h. bereits vor Ablauf der maximalen Meßzeit bzw. vor Erreichen der maximalen Anzahl von Temperaturmessungen.

Bei einer bevorzugten Ausführung des erfindungsgemäßen Thermometers wird bereits während den laufenden Temperaturmessungen von der Steuereinrichtung eine Signalisiereinrichtung aktiviert, beispielsweise in Form einer blinkenden Leuchtdiode und/oder einer Folge von Pieptönen, die auch den Abschluß des Meßvorgangs dem Benutzer signalisiert, beispielsweise durch ein konstantes Leuchten der Leuchtdiode und/oder einen langgezogenen Piepton. Auf diese Weise soll verhindert werden, daß der Benutzer das Thermometer bereits vor Beendigung des gesamten Meßvorgangs wieder aus dem Ohr herauszieht.

Eine vorteihafte Ausführung eines erfindungsgemäßen Thermometers weist ferner einen Datenspeicher und die obengenannte Signalisiereinrichtung auf, durch die im Datenspeicher gespeicherte Daten ausgebbar sind, beispielsweise die gemessenen Temperaturen, die angezeigten Temperaturen, die Anzahl der insgesamt durchgeführten Meßabläufe oder dgl.. Zu diesem Zweck ist das Blinken der Leuchtdiode oder das Piepen in einer bestimmten Weise codiert, sodaß diese Daten von einem externen Lesegerät aufgenommen, decodiert, weiterverarbeitet und/oder angezeigt werden können.

## Patentansprüche

1. Infrarot-Strahlungsthermometer, insbesondere Ohrthermometer zur Fiebermessung, mit einem Infrarot-Sensor, einer durch ein Heizelement beheizbaren Meßspitze, einer von einem Benutzer bedienbaren Betätigungseinrichtung, einer Steuereinrichtung und einer Anzeigeeinrichtung,
**dadurch gekennzeichnet,**
**daß** die Steuereinrichtung die folgenden Funktionen ausführt:
Einschalten des Heizelementes nachdem der Betrieb des Thermometers initiiert ist, um dadurch die Messspitze des Thermometers zu beheizen;
das Heizelement abschalten, nachdem der Benutzer die Betätigungseinrichtung betätigt hat, wobei ein Betätigen der Betätigungseinrichtung einen Messvorgang startet;
nach Ablauf einer bestimmten Zeit, die auf das Betätigen der Betätigungseinrichtung folgt, nacheinander mehrere Temperaturmessungen durchführen;
aus den gemessenen Temperaturen die anzuzeigende Temperatur ermitteln oder eine Fehlermeldung generieren; und
spätestens nach Ablauf einer maximalen Meßdauer oder nach einer maximalen Anzahl von Temperaturmessungen die anzuzeigende Temperatur oder eine Fehlermeldung auf der Anzeigeeinrichtung anzeigen.

2. Thermometer nach Anspruch 1,
**dadurch gekennzeichnet, daß**
die Steuereinrichtung ein Kriterium für die Aussagekraft der gemessenen Temperaturen bestimmt, und bereits dann die anzuzeigende Temperatur anzeigt, wenn das Kriterium erfüllt ist, und bereits nach einer minimalen Meßdauer oder nach einer minimalen Anzahl von Temperaturmessungen die Fehlermeldung anzeigt, wenn mit einer Erfüllung des Kriterium innerhalb der maximalen Meßdauer oder nach einer maximalen Anzahl von Temperaturmessungen nicht zu rechnen ist.

3. Thermometer nach Anspruch 1 oder 2,
**dadurch gekennzeichnet, daß**
es ferner eine Signalisiereinrichtung aufweist, die von der Steuereinrichtung ansteuerbar ist, die den Ablauf und/oder das Ende der Temperaturmessungen dem Benutzer signalisiert.

4. Thermometer nach Anspruch 1 oder 2,
**dadurch gekennzeichnet, daß**
es ferner einen Datenspeicher und eine Signalisiereinrichtung aufweist, und daß mittels der Signalisiereinrichtung die im Datenspeicher gespeicherten Daten ausgebbar sind.

5. Thermometer nach Anspruch 1 oder 2,
**dadurch gekennzeichnet, daß**
es ferner eine Detektionseinrichtung aufweist, die feststellen kann, ob das Thermometer ins Ohr eingeführt ist oder nicht.

6. Verfahren zur Temperaturmessung mittels eines Strahlungsthermometers mit beheizbarer Meßspitze, insbesondere eines Ohrthermometers zur Fiebermessung,
**dadurch gekennzeichnet daß**,
nach dem Einschalten des Thermometers ein Heizelement eingeschaltet wird, das die Meßspitze des Thermometers beheizt,
nach dem Betätigen einer Betätigungseinrichtung das Heizelement ausgeschaltet wird, wobei das Betätigen der Betätigungseinrichtung einen Messvorgang startet,
nach Ablauf einer bestimmten Zeit, die auf das Betätigen der Betätigungseinrichtung folgt, nacheinander mehrere Temperaturmessungen durchgeführt werden,
aus den gemessenen Temperaturen die anzuzeigende Temperatur ermittelt oder eine Fehlermeldung generiert wird, und
spätestens nach Ablauf einer maximalen Meßdauer oder nach einer maximalen Anzahl von Temperaturmessungen die anzuzeigende Temperatur oder die Fehlermeldung auf einer Anzeigeeinrichtung angezeigt wird.

7. Verfahren nach Anspruch 6,
**dadurch gekennzeichnet,**
**daß** ein Kriterium für die Aussagekraft der gemessenen Temperaturen bestimmt wird, und bereits dann die anzuzeigende Temperatur angezeigt wird, wenn das Kriterium erfüllt ist, und bereits nach einer minimalen Meßdauer oder nach einer minimalen Anzahl von Temperaturmessungen die Fehlermeldung angezeigt wird, wenn mit einer Erfüllung des Kriteriums innerhalb der maximalen Meßdauer oder nach einer maximalen Anzahl von Temperaturmessungen nicht zu rechnen ist.

8. Verfahren nach Anspruch 6 oder 7,
**dadurch gekennzeichnet,**
**daß** der Ablauf und/oder das Ende der Temperaturmessungen dem Benutzer signalisiert wird.

9. Verfahren nach Anspruch 6 oder 7,
**dadurch gekennzeichnet,**
**daß** erst dann mit den Temperaturmessungen begonnen wird, wenn eine Detektionseinrichtung festgestellt hat, daß sich die Meßspitze des Thermometers im Ohr befindet.

## Claims

1. An infrared radiation thermometer, especially an ear thermometer for measuring temperature, comprising an infrared sensor, a measuring tip which can be heated by a heating element, an actuating device which can be operated by a user, a control device and a display device,
**characterized in**
**that** the control device performs the following functions:
switching on the heating element after the operation of the thermometer has been initiated to thereby heat the measuring tip of the thermometer;
switching off the heating element after the user has actuated the actuating device, wherein
an actuation of the actuating device starts a measuring operation;
after a certain time has elapsed that follows the actuation of the actuating device, carrying out a plurality of temperature measurements one after the other;
determining the temperature to be displayed from the measured temperatures or generating an error message, and
at the latest after a maximum measurement time has elapsed or after a maximum number of temperature measurements, displaying the temperature to be displayed or an error message on the display device.

2. The thermometer according to claim 1,
**characterized in that**
the control device determines a criterion for the validity of the measured temperatures and then displays the temperature to be displayed if the criterion is satisfied and after a minimum measurement time or after a minimum number of temperature measurements, displays the error message if the criterion cannot be expected to be satisfied within the maximum measurement duration or after a maximum number of temperature measurements.

3. The thermometer according to claim 1 or claim 2,
**characterized in that**
it also has a signaling device which can be controlled by the control device, which signals the sequence and/or the end of the temperature measurements to the user.

4. The thermometer according to claim 1 or claim 2,
**characterized in that**
it also has a data storage device and a signaling device and that the data stored in the data storage device can be output by means of the signaling device.

5. The thermometer according to claim 1 or claim 2,
**characterized in that**
it also has a detection device which can determine whether the thermometer is inserted in the ear or not.

6. A method for measuring temperature by means of a radiation thermometer comprising a heatable measuring tip, especially an ear thermometer for measuring temperature, **characterized in that**
after switching on the thermometer, a heating element is switched on which heats the measuring tip of the thermometer,
after actuating an actuating device, the heating element is switched off, wherein the actuation of the actuating device starts a measuring operation,
after a certain time has elapsed that follows the actuation of the actuating device, a plurality of temperature measurements are carried out one after the other,
the temperature to be displayed is determined from the measured temperatures or an error message is generated, and
at the latest after a maximum measurement time has elapsed or after a maximum number of temperature measurements, the temperature to be displayed or the error message is displayed on a display device.

7. The method according to claim 6,
**characterized in**
**that** a criterion for the validity of the measured temperatures is determined and the temperature to be displayed is then displayed if the criterion is satisfied and after a minimum measuring time or after a minimum number of temperature measurements the error message is displayed if the criterion cannot be expected to be satisfied within the maximum measurement time or after a maximum number of temperature measurements.

8. The method according to claim 6 or claim 7,
**characterized in**
**that** the sequence and/or the end of the temperature measurements is signaled to the user.

9. The method according to claim 6 or claim 7,
**characterized in**
**that** the temperature measurements are only begun if a detection device has established that the measuring tip of the thermometer is located in the ear.

## Revendications

1. Thermomètre à rayonnement infra-rouge, notamment thermomètre auriculaire pour la mesure de la fièvre, comprenant un capteur infra-rouge, une sonde de mesure pouvant être chauffée par un élément chauffant, un dispositif d'actionnement pouvant être commandé par un utilisateur, un dispositif de commande et un dispositif d'affichage,
**caractérisé**
**en ce que** le dispositif de commande exécute les fonctions suivantes :
mise en marche de l'élément chauffant après que le fonctionnement du thermomètre ait été initié, pour ainsi chauffer la sonde de mesure du thermomètre ;
arrêt de l'élément chauffant après que l'utilisateur ait actionné le dispositif d'actionnement, un actionnement du dispositif d'actionnement démarrant une opération de mesure ;
après écoulement d'un temps déterminé, qui suit l'actionnement du dispositif d'actionnement, exécution successive de plusieurs mesures de température ;
à partir des températures mesurées, détermination de la température à afficher ou production d'un message d'erreur ; et
au plus tard après écoulement d'une durée de mesure maximum ou après un nombre maximum de mesures de température, affichage de la température à afficher ou d'un message d'erreur sur le dispositif d'affichage.

2. Thermomètre selon la revendication 1,
**caractérisé**
**en ce que** le dispositif de commande détermine un critère pour la pertinence des températures mesurées, et affiche au demeurant la température à afficher lorsque le critère est satisfait, et affiche le message d'erreur au demeurant après une durée de mesure minimum ou après un nombre minimum de mesures de température, lorsque la satisfaction du critère n'est pas attendue au cours de la durée de mesure maximum ou après un nombre maximum de mesures de température.

3. Thermomètre selon la revendication 1 ou la revendication 2,
**caractérisé**
**en ce qu'**il comporte par ailleurs un dispositif de signalisation, qui peut être commandé par le dispositif de mesure et qui signale à l'utilisateur le déroulement et/ou la fin des mesures de température.

4. Thermomètre selon la revendication 1 ou la revendication 2,
**caractérisé**
**en ce qu'**il comporte par ailleurs une mémoire de données et un dispositif de signalisation, et en ce que les données mémorisées dans la mémoire de données peuvent être délivrées par le dispositif de signalisation.

5. Thermomètre selon la revendication 1 ou la revendication 2,
**caractérisé**
**en ce qu'**il comporte par ailleurs un dispositif de détection, qui est en mesure de constater si le thermomètre a été inséré dans l'oreille ou non.

6. Procédé pour la mesure de température au moyen d'un thermomètre à rayonnement à sonde de mesure chauffante, notamment d'un thermomètre auriculaire pour la mesure de la fièvre,
**caractérisé en ce que**
après la mise en marche du thermomètre, un élément chauffant, qui chauffe la sonde de mesure du thermomètre, est mis en marche,
après l'actionnement du dispositif d'actionnement, l'élément chauffant est arrêté, l'actionnement du dispositif d'actionnement démarrant une opération de mesure,
après écoulement d'un temps déterminé, qui suit l'actionnement du dispositif d'actionnement, plusieurs mesures de température sont effectuées successivement,
à partir des températures mesurées, est déterminée la température à afficher ou est généré un message d'erreur, et
au plus tard après écoulement d'une durée de mesure maximum ou après un nombre maximum de mesures de température, la température à afficher ou le message d'erreur sont affichés sur un dispositif d'affichage.

7. Procédé selon la revendication 6,
**caractérisé**
**en ce que** l'on détermine un critère pour la pertinence des températures mesurées, et l'on affiche au demeurant la température à afficher lorsque le critère est satisfait, et l'on affiche le message d'erreur au demeurant après une durée de mesure minimum ou après un nombre minimum de mesures de température, lorsque la satisfaction du critère n'est pas attendue au cours de la durée de mesure maximum ou après un nombre maximum de mesures de température.

8. Procédé selon la revendication 6 ou la revendication 7,
**caractérisé**
**en ce que** le déroulement et/ou la fin des mesures de température est signalé à l'utilisateur.

9. Procédé selon la revendication 6 ou la revendication 7,
**caractérisé**
**en ce que** les mesures de température sont démarrées seulement lorsqu'un dispositif de détection a constaté que la sonde de mesure du thermomètre se trouve dans l'oreille.
